(19) Europäisches Patentamt
European Patent Office
Office européen des brevets

(11) **EP 0 606 303 B1**

(12) **EUROPEAN PATENT SPECIFICATION**

(45) Date of publication and mention
of the grant of the patent:
**08.01.1997   Bulletin 1997/02**

(51) Int Cl.[6]: **C08F 10/02**, C08F 2/06,
C08F 4/642

(21) Application number: **92920401.4**

(22) Date of filing: **25.09.1992**

(86) International application number:
**PCT/CA92/00420**

(87) International publication number:
**WO 93/07189 (15.04.1993 Gazette 1993/10)**

(54) **CONTROL OF A SOLUTION PROCESS FOR POLYMERIZATION OF ETHYLENE**

BEHERRSCHUNG DES LOESUNGSPOLYMERISATIONSVERFAHRENS FUER ETHYLEN

CONTROLE D'UN PROCEDE DE POLYMERISATION EN SOLUTION DE L'ETHYLENE

(84) Designated Contracting States:
**BE CH DE FR GB IT LI NL**

(30) Priority:   **03.10.1991   GB 9120971**

(43) Date of publication of application:
**20.07.1994   Bulletin 1994/29**

(73) Proprietor: **Nova Chemicals (International) SA
1752 Villars-sur-Glane 1 (CH)**

(72) Inventors:
• **ZBORIL, Vaclav, George
Kingston, Ontario K7M 5Y7 (CA)**

• **BROWN, Stephen, John R.R. 1
Elginburg, Ontario K0H 1M0 (CA)**

(74) Representative: **Harrison, David Christopher et al
MEWBURN ELLIS
York House
23 Kingsway
London WC2B 6HP (GB)**

(56) References cited:
**EP-A- 0 280 353          US-A- 4 342 855
US-A- 4 681 924**

**Description**

The present invention relates to a solution process and catalyst for the preparation of polymers of ethylene, especially homopolymers of ethylene and copolymers of ethylene and higher alpha-olefins. In particular, the invention relates to a method of control of a solution polymerization process for the preparation of such polymers in which the catalyst used in the process is activated with a mixture of an aluminum alkyl and an alkoxy aluminum alkyl compound, the ratio in the mixture being used in the control of the process.

Polymers of ethylene, for example, homopolymers of ethylene and copolymers of ethylene and higher alpha-olefins, are used in large volumes for a wide variety of end-uses, for example, in the form of film, fibres, moulded or thermoformed articles, pipe coating and the like.

There are two types of processes for the manufacture of polyethylene that involve the polymerization of monomers in an inert liquid medium in the presence of a coordination catalyst viz. those which operate at temperatures below the melting or solubilization temperature of the polymer and those which operate at temperatures above the melting or solubilization temperature of the polymer. The latter are referred to as "solution" processes, an example of which is described in Canadian Patent 660,869 of A.W. Anderson, E.L. Fallwell and J.M. Bruce, which issued 1963 April 9. In a solution process, the process is operated so that both the monomer and polymer are soluble in the reaction medium. Accurate control over the degree of polymerization, and hence the molecular weight and molecular weight distribution of the polymer obtained, may be achieved by control of the temperature conversion in the reactor system.

The molecular weight distribution of the polymer made by a solution process is advantageously controlled by preparing the polymer in at least two reactors which are operated under different conditions, most frequently at different temperatures. These conditions determine the molecular weight of the polymer fractions that are produced. The relative amounts of the different fractions is controlled by adjusting the conversion in each of the reactors. The conversion is controlled either by adjusting the catalyst type and concentration in each reactor, which requires as many catalyst systems as there are reactors, or by adjusting the reactor hold-up time. Either of the control strategies tends to be complicated and costly.

US-A-4681924 discloses solution copolymerization of ethylene with a $C_{3-20}$ alpha-mono-olefin at temperatures between 200° and 300°C with a cocatalyst mixture of alkylaluminium chloride and alkylaluminium dialkoxides or dialkylaluminium aloxides in various mole percentages.

It has now unexpectedly been found that alkyl aluminum and alkoxy aluminum alkyls can produce significantly different responses when used in different ratios as activators in a solution polymerization process, and that such differences may be exploited to provide a relatively simple method of controlling a multi-reactor or tubular reactor system.

Accordingly, the present invention provides in a solution process for the preparation of high molecular weight polymers of alpha-olefins selected from the group consisting of homopolymers of ethylene and copolymers of ethylene and $C_3$-$C_{12}$ higher alpha-olefins, by polymerization of ethylene and/or mixtures of ethylene and $C_3$-$C_{12}$ higher alpha-olefins under non-isothermal conditions in a tubular reactor or in a system of reactors which operate under different conditions, in the presence of a catalytic amount of a titanium-containing coordination catalyst in an inert solvent at a temperature in excess of 105°C, the improvement characterized in that:

(a) activating the catalyst with a solution of a mixture of aluminum alkyl and alkoxy aluminum alkyl in inert solvent; and
(b) controlling said process by adjusting the ratio of aluminum alkyl to alkoxy aluminum alkyl in the mixture of (a);

said aluminum alkyl being of the formula $AlR_nX_{3-n}$ and said alkoxy aluminum alkyl being of the formula $AlR'_m(OR'')_{3-m}$, in which each R, R' and R'' is independently selected from alkyl or aryl of 1-20 carbon atoms, X is halogen, n is 2-3 and m is 0-2.

The present invention further provides a solution process for the preparation of high molecular weight polymers of alpha-olefins selected from the group consisting of homopolymers of ethylene and copolymers of ethylene and $C_3$-$C_{12}$ higher alpha-olefins, said process comprising feeding monomer selected from the group consisting of ethylene and mixtures of ethylene and at least one $C_3$-$C_{12}$ higher alpha-olefin, a coordination catalyst and inert hydrocarbon solvent to a reactor, polymerizing said monomer under non-isothermal conditions in a tubular reactor or in a system of reactors which operate under different conditions, at a temperature in the range of 105-320°C and recovering the polymer so obtained, characterized in that said coordination catalyst is been formed from a first component and a second component, said first component containing titanium and said second component being a mixture of aluminum alkyl and alkoxy aluminum alkyl, in which the control of said process includes adjusting the ratio of alkyl aluminum to alkoxy aluminum alkyl, said aluminum alkyl being of the formula $AlR_nX_{3-n}$ and said alkoxy aluminum alkyl being of the formula $AlR'_m(R'')_{3-m}$, in which each R, R' and R'' is independently selected from alkyl or aryl of 1-20 carbon atoms, X is halogen, n is 2-3 and m is 0-2.

In a preferred embodiment of the processes of the invention, R is alkyl of 2-8 carbon atoms and n=3, and each of R' and R" is alkyl of 2-8 carbon atoms and m=2.

In an embodiment of the process of the invention, the second component is in the form of a mixture of trialkyl aluminum and an alcohol in which the amount of alcohol is less than the stoichiometric amount to form dialkyl alkoxy aluminum, especially in which the trialkyl aluminum is $AlR^3_3$ in which $R^3$ is an alkyl group having 1-10 carbon atoms and the alcohol is of the formula $R^4OH$ in which $R^4$ is alkyl or aryl of 1-20 carbon atoms, especially alkyl of 1-16 carbon atoms.

In another embodiment of the process, the first component is formed from:

(i) a mixture of $MgR^1_2$ and $AlR^2_3$ in which each $R^1$ and $R^2$ are the same or different and each is independently selected from alkyl groups having 1-10 carbon atoms;
(ii) a reactive chloride component; and
(iii) titanium tetrachloride.

Alternatively, the first component may be formed by combining solutions of titanium tetrahalide, optionally containing vanadium oxytrihalide, with organoaluminum compound e.g. trialkyl aluminum or dialkyl aluminum halide, at a temperature of less than 30°C, heating the resultant admixture to a temperature of 150-300°C for a period of 5 seconds to 60 minutes; the preferred halide is chloride.

In a further embodiment, the forming of the first and second catalyst components and the admixing thereof are carried out in-line at a temperature of less than 30°C.

The present invention is directed to a process for the preparation of high molecular weight polymers of alpha-olefins, such polymers being intended for fabrication into articles by extrusion, injection moulding, thermoforming, rotational moulding and the like. In particular, the polymers of alpha-olefins are homopolymers of ethylene and copolymers of ethylene and higher alpha-olefins i.e. alpha-olefins of the ethylene series, especially such higher alpha-olefins having 3 to 12 carbon atoms i.e. $C_3$-$C_{12}$ alpha-olefins, examples of which are 1-butene, 1-hexene and 1-octene. The preferred higher alpha-olefins have 4-10 carbon atoms. In addition cyclic endomethylenic dienes may be fed to the process with the ethylene or mixtures of ethylene and $C_3$-$C_{12}$ alpha-olefin. Such polymers are known.

In the process of the present invention, monomer, a coordination catalyst and inert hydrocarbon solvent, and optionally hydrogen, are fed to a reactor system. The monomer may be ethylene or mixtures of ethylene and at least one $C_3$-$C_{12}$ higher alpha-olefin, preferably ethylene or mixtures of ethylene and at least one $C_4$-$C_{10}$ higher alpha-olefin; it will be understood that the alpha-olefins are hydrocarbons.

The coordination catalyst is formed from two components viz. a first component and a second component. The first component contains titanium or admixtures thereof with other transition metals in lower than maximum valency, and is an organometallic component of the type typically used in solution polymerization processes. The first component may be in a solid form. Examples of the first component have been given above.

The second component is a solution of a mixture of aluminum alkyl and alkoxy aluminum alkyl in inert solvent, the ratio of aluminum alkyl to alkoxy aluminum alkyl in the mixture being used in the control of the process. In the mixture, the aluminum alkyl is of the formula $AlR_nX_{3-n}$ and the alkoxy aluminum alkyl is of the formula $AlR'_m(OR")_{3-m}$, in which each R, R' and R" is independently selected from alkyl or aryl of 1-20 carbon atoms, X is halogen especially fluorine, chlorine and bromine, n is 2-3 and m is 0-2. The preferred halogen is chlorine.

The alkoxy aluminum alkyl may be prepared by admixing the corresponding alkyl aluminum with the corresponding alcohol, so as to form the alkoxy aluminum alkyl. Preferably, the alkyl aluminum is the same as the aluminum alkyl in the second component. In fact, the preferred method of forming the second component is to add the alcohol to the alkyl aluminum in less than the stoichiometric amount required to convert all of the alkyl aluminum to alkoxy aluminum alkyl. The mixing may be conveniently carried out in-line at a temperature of less than 30°C, permitting reaction to occur for some minimum time. This time depends on the type and reactivity of the components used to prepare a particular catalyst. As exemplified hereinafter, feeding the alcohol directly to the reactor in the polymerization process is detrimental to the polymerization process.

The ratio of the alcohol to the alkyl aluminum used to achieve control of the desired distribution of temperature and/or conversion in the reactor system is in the range of 0.1-1 (alcohol:aluminum). Alternatively, this ratio may be adjusted to match the catalyst activity to the polymerization conditions e.g. temperature and hold-up time, to obtain the desired performance of the catalyst in the reactor system.

The concentration of the components of the solutions used in the preparation of the catalyst is not critical and is primarily governed by practical considerations. Concentrations of as low as 25 ppm, on a weight basis, may be used but higher concentrations, for example 100 ppm and above, are preferred.

As exemplified hereinafter, the sequence of steps in the preparation of the catalyst is important in obtaining a catalyst with high activity.

The solvent used in the preparation of the coordination catalyst is an inert hydrocarbon, in particular a hydrocarbon that is inert with respect to the coordination catalyst. Such solvents are known and include for example, hexane, heptane, octane, cyclohexane, methylcyclohexane and hydrogenated naphtha. The solvent used in the preparation of the catalyst is preferably the same as that fed to the reactor for the polymerization process.

The coordination catalyst described herein is used in the process of the present invention without separation of any of the components of the catalyst. In particular, neither liquid nor solid fractions are separated from the catalyst before it is fed to the reactor. In addition, the catalyst and its components are not slurries. All the components are easy-to-handle, storage stable liquids.

The first component of the catalyst described herein may be used, according to the process of the present invention, over the wide range of temperatures that may be used in an alpha-olefin polymerization process operated under solution conditions. For example such polymerization temperatures may be in the range of 105-320°C and especially in the range of 105-310°C. However, the activator is particularly effective at controlling a solution polymerization process which is operated in a reactor system in which the polymerization is carried out at various temperatures, as in a tubular reactor or multi-reactor system.

The pressures used in the process of the present invention are those known for solution polymerization processes, for example, pressures in the range of about 4-20 MPa.

In the process of the present invention, the alpha-olefin monomers are polymerized in the reactor in the presence of the catalyst. Pressure and temperature are controlled so that the polymer formed remains in solution.

Small amounts of hydrogen, for example 1-40 parts per million by weight, based on the total solution fed to the reactor may be added to one or more of the feed streams of the reactor system in order to improve control of the melt index and/or molecular weight distribution and thus aid in the production of a more uniform product, as is disclosed in Canadian Patent 703,704.

The solution passing from the polymerization reactor is normally treated to deactivate any catalyst remaining in the solution. A variety of catalyst deactivators are known, examples of which include fatty acids, alkaline earth metal salts of aliphatic carboxylic acids, alcohols and trialkanolamines, an example of which is triisopropanolamine.

The hydrocarbon solvent used for the deactivator is preferably the same as the solvent used in the polymerization process. If a different solvent is used, it must be compatible with the solvent used in the polymerization mixture and not cause adverse effects on the solvent recovery system associated with the polymerization process.

After deactivation of the catalyst, the solution containing polymer may be passed through a bed of activated alumina or bauxite which removes part or all of the deactivated catalyst residues. It is, however, preferred that the process be operated without removal of deactivated catalyst residues. The solvent may then be flashed off from the polymer, which subsequently may be extruded into water and cut into pellets or other suitable comminuted shapes. The recovered polymer may then be treated with saturated steam at atmospheric pressure to, for example, reduce the amount of volatile materials and improve polymer colour. The treatment may be carried out for about 1 to 16 hours, following which the polymer may be dried and cooled with a stream of air for 1 to 4 hours. Pigments, antioxidants, UV screeners, hindered amine light stabilizers and other additives may be added to the polymer either before or after the polymer is initially formed into pellets or other comminuted shapes.

The antioxidant incorporated into polymer obtained from the process of the present invention may, in embodiments, be a single antioxidant e.g. a hindered phenolic antioxidant, or a mixture of antioxidants e.g. a hindered phenolic antioxidant combined with a secondary antioxidant e.g. a phosphite. Both types of antioxidant are known in the art. For example, the ratio of phenolic antioxidant to secondary antioxidant may be in the range of 0.1:1 to 5:1 with the total amount of antioxidant being in the range of 200 to 3000 ppm.

The process of the present invention may be used to prepare homopolymers of ethylene and copolymers of ethylene and higher alpha-olefins having densities in the range of, for example, about 0.900-0.970 g/cm$^3$ and especially 0.915-0.965 g/cm$^3$; the polymers of higher density, e.g. about 0.960 and above, being homopolymers. Such polymers may have a melt index, as measured by the method of ASTM D-1238, condition E, in the range of, for example, about 0.1-200, and especially in the range of about 0.1-120 dg/min. The polymers may be manufactured with narrow or broad molecular weight distribution. For example, the polymers may have a stress exponent, a measure of molecular weight distribution, in the range of about 1.1-2.5 and especially in the range of about 1.3-2.0. The process of the invention is believed to be particularly useful in the manufacture of broad molecular distribution polymers.

Stress exponent is determined by measuring the throughput of a melt indexer at two stresses (2160g and 6480g loading) using the procedures of the ASTM melt index test method, and the following formula:

$$\text{Stress exponent} = \frac{1}{0.477} \log \frac{(\text{wt.extruded with 6480g wt.})}{(\text{wt.extruded with 2160g wt.})}$$

Stress exponent values of less than about 1.40 indicate narrow molecular weight distribution while values above about 1.70 indicate broad molecular weight distribution.

The polymers produced by the process of the present invention are capable of being fabricated into a wide variety of articles, as is known for homopolymers of ethylene and copolymers of ethylene and higher alpha-olefins.

The process of the present invention is believed to be particularly advantageous in the preparation of broad molecular weight distribution polymers using an adiabatic tubular reactor, or a series of reactors.

Unless otherwise noted, in the examples hereinafter the following procedures were used:

The reactor was a 81 mL free-volume (regular internal shape, with the approximate dimensions of 15 x 90 mm) pressure vessel fitted with six regularly spaced internal baffles. The vessel was fitted with a six blade turbine-type impeller, a heating jacket, pressure and temperature controllers, three feed lines and a single outlet. The feed lines were located on the top of the vessel, each at a radial distance of 40 mm from the axis, while the outlet line was axial with the agitator shaft. The catalyst precursors and other ingredients were prepared as solutions in cyclohexane which had been purified by being passed through beds of activated alumina, molecular sieves and silica gel prior to being stripped with nitrogen.

Ethylene was metered into the reactor as a cyclohexane solution prepared by dissolving purified gaseous ethylene in purified solvent. The feed rates of the components of the catalyst were adjusted to produce the desired conditions in the reactor. The desired hold-up times in the catalyst line were achieved by adjusting the length of the tubing through which the components were passed. The hold-up time in the reactor was held constant by adjusting the solvent flow to the reactor such that the total flow remained constant. The reactor pressure was maintained at 7.5 MPa and the temperature and flows were held constant during each experimental run.

The initial (no conversion) monomer concentration in the reactor was 3-4 wt%. A solution of deactivator viz. triisopropanolamine or nonanoic acid, in toluene or cyclohexane was injected into the reactor effluent at the reactor outlet line. The pressure of the stream was then reduced to about 110 kPa (Abs.) and the unreacted monomer was continuously stripped off with nitrogen. The amount of unreacted monomer was monitored by gas chromatography. The catalyst activity was defined as

$$Kp = (Q/(1-Q))(1/HUT)(1/catalyst\ concentration)$$

where Q is the fraction of ethylene (monomer) converted, HUT is the reactor hold-up time expressed in minutes and the catalyst concentration is the concentration in the reaction vessel expressed in mmol/l. The catalyst concentration is based on the sum of the transition metals. The polymerization activity (Kp) was calculated.

The present invention is illustrated by the following examples. Unless noted to the contrary, in each example the solvent used was cyclohexane, the monomer was ethylene and the reactor hold-up time was held constant at 3.0 min.

Example 1

The catalyst was prepared by the in-line mixing at ambient temperature (approximately 30°C) of solutions of each of dibutyl magnesium, triethyl aluminum, tert butylchloride and titanium tetrachloride in cyclohexane, followed by the addition of further solution of triethyl aluminum in cyclohexane. The concentrations and flows of each species were adjusted such that the following mole ratios were obtained:

chlorine (from tert butyl chloride)/magnesium = 2.4; magnesium/titanium = 5.0;
aluminum (first triethyl aluminum)/titanium = 0.9;
aluminum (second triethyl aluminum)/titanium = 3.0.

The reactor polymerization was operated at a temperature of 230°C measured in the reactor. The solution passing from the reactor was deactivated and the polymer recovered, as described above. Catalyst activity (Kp) was calculated and the results obtained are shown in Table 1. The ratio reported for Cl/Mg is the optimized ratio required in order to obtain maximum catalyst activity at the indicated ratio of Mg/Ti.

In Run 2 onwards, the catalyst preparation was as above with the exception that one mole equivalent of alcohol was added to the second aliquot of triethyl aluminum (thus forming the alkoxide).

TABLE I

| Run No. | RATIOS | | | | Alcohol | Temp | Kp |
|---|---|---|---|---|---|---|---|
| | Cl/Mg | Mg/Ti | Al$^1$/Ti | Al$^2$/Ti | | | |
| 1 | 2.4 | 5.0 | 0.9 | 3.0 | none | 230 | 13.9 |
| 2 | 2.2 | 5.0 | 0.9 | 6.0 | t-butanol | 230 | 31.7 |
| 3 | 2.4 | 5.0 | 0.9 | 3.0 | t-butanol | 230 | 4.8 |
| 4 | 2.3 | 5.0 | 0.9 | 3.0 | phenol | 230 | 30.4 |
| 5 | 2.2 | 5.0 | 0.9 | 3.0 | ethanol | 230 | 24.9 |
| 6 | 2.3 | 5.0 | 0.9 | 4.5 | n-decanol | 230 | 24.1 |
| 7 | 2.2 | 5.0 | 0.9 | 3.0 | neopentyl alcohol | 230 | 29.3 |
| 8 | 2.3 | 5.0 | 0.9 | 6.0 | t-butanol[3] | 230 | 2.7 |

Note:

1 ratio of triethyl aluminum to titanium at first addition.

2 ratio of triethyl aluminum or alkoxydiethyl aluminum to titanium at second addition.

Kp calculated polymerization rate constant. 1/mmol/min.

3. t-butanol added to the reactor rather than to the catalyst.

Runs 1, 2 and 3 illustrate that the ratios of the catalyst components for the alkoxide systems have significant effects on the increase in activity, which is expected to vary with the type and composition of the other catalyst components and the mode of operation of the process but nonetheless illustrates that increases in catalytic activity of greater than a factor of two are obtainable. Run 3 cf. Run 2 illustrates sensitivity of the catalyst activity to changes in catalyst composition.

Runs 4, 5, 6 and 7 illustrate the use of alcohols other than tert butanol.

Run 8 illustrates the detrimental effect of the addition of the alcohol directly to the reactor, rather than to the second triethyl aluminum stream. This indicates that prior formation the alkoxydialkyl aluminum species is necessary.

Example II

Catalyst were prepared as in Example I, except that in Runs 9-13 the triethyl aluminum at the second addition point was spiked with varying amounts of tert butyl alcohol, thus forming varying proportions of the t-butoxydiethyl aluminum (see Table II).

TABLE II

| Run No. Kp | RATIOS | | | | t-butanol/Al[3] | | Temp |
|---|---|---|---|---|---|---|---|
| | Cl/Mg | Mg/Ti | Al$^1$/Ti | Al$^2$/Ti | | | |
| 9 | 2.2 | 5.0 | 0.9 | 6.0 | 0.0 | 230 | 5.2 |
| 10 | 2.2 | 5.0 | 0.9 | 6.0 | 0.2 | 230 | 6.7 |
| 11 | 2.2 | 5.0 | 0.9 | 6.0 | 0.4 | 230 | 9.6 |
| 12 | 2.2 | 5.0 | 0.9 | 6.0 | 0.6 | 230 | 13.7 |
| 13 | 2.2 | 5.0 | 0.9 | 6.0 | 0.8 | 230 | 19.7 |
| 12 | 2.2 | 5.0 | 0.9 | 6.0 | 1.0 | 230 | 31.7 |

Note:

1 mole ratio of triethyl aluminum to titanium at first addition.

2 mole ratio of triethyl aluminum or alkoxydiethyl aluminum to titanium at second addition.

3 mole ratio of t-butanol to the second addition of triethylaluminum.

The results show that, at high temperature, increasing the proportion of the alkoxydialkyl aluminum relative to the trialkyl aluminum increases the activity of the catalyst.

Example III

The catalyst was prepared from solutions of titanium tetrachloride, vanadium oxytrichloride and diethylaluminum chloride in cyclohexane. The admixed solutions were heat treated at 205-210°C for 110-120 seconds by admixing with hot cyclohexane solvent. The second co-catalyst (triethyl aluminum) previously mixed with n-decanol in the runs indicated was then added to activate the catalyst. The polymerization reactor was run at the temperature indicated in Table III. The solution passing from the reactor was deactivated and the polymer recovered as described above. The catalyst activity was calculated.

TABLE III

| Run No. | RATIOS | | | Temp | Kp |
|---|---|---|---|---|---|
| | Al[1]/(Ti+V) | Al[2]/(Ti+V) | n-decanol[3] | | |
| 15 | 1.1 | 2.0 | none | 260 | 5.3 |
| 16 | 1.1 | 2.0 | 1.0 | 260 | 11.7 |
| 17 | 1.1 | 2.0 | none | 230 | 19.9 |
| 18 | 1.0 | 2.0 | 1.0 | 230 | 37.9 |
| 19 | 1.0 | 2.0 | none | 130 | 216 |
| 20 | 1.0 | 3.5 | 1.0 | 130 | 75 |

Note: In each run, moles Ti/moles V = 1 1 mole ratio of diethylaluminum chloride to the sum of the titanium and vanadium.

2 mole ratio of the second co-catalyst (either triethyl aluminum or n-decoxydiethyl aluminum) to the sum of the titanium and vanadium.

3 mole ratio of n-decanol to the second addition of triethylaluminum.

It will be noted that temperature has a major impact on the activity of the catalyst, which may be used in the control of the process.

Example IV

The catalyst synthesis was the same as used in Example III with the exception that the n-decanol and the triethyl aluminum were mixed in-line in various ratios. A two-minute hold-up time was used at 30°C before this solution was subsequently mixed with the heat treated catalyst stream. The reactor temperature was held constant at 130°C.

TABLE IV

| Run No. | RATIOS | | | Temp | Kp |
|---|---|---|---|---|---|
| | Al[1]/(Ti+V) | Al[2]/(Ti+V) | n-decanol[3] | | |
| 21 | 1.0 | 2.0 | 0 | 130 | 216 |
| 22 | 1.0 | 2.0 | 0.5 | 130 | 126 |
| 23 | 1.0 | 2.0 | 0.9 | 130 | 73 |
| 24 | 1.0 | 2.0 | 1.0 | 130 | 15 |
| 25 | 1.0 | 2.0 | 1.1 | 130 | 3 |

Note: In each run, moles Ti/moles V = 1 1 mole ratio of diethylaluminum chloride to the sum of the titanium and vanadium.

2 mole ratio of the second co-catalyst (either triethyl aluminum or n-decoxydiethyl aluminum) to the sum of the titanium and vanadium.

3 mole ratio of n-decanol to the second addition of triethylaluminum.

It will be noted that, at low temperature, the addition of alcohol in any proportion results in a loss of activity as indicated in Table IV.

Example V

The catalyst preparation was identical to that in Example IV, except that the autoclave was maintained at 260°C.

TABLE V

| Run No. | RATIOS | | | Temp | Kp |
|---|---|---|---|---|---|
| | Al[1]/(Ti+V) | Al[2]/(Ti+V) | n-decanol[3] | | |
| 26 | 1.1 | 2.0 | 0 | 260 | 5.3 |
| 27 | 1.1 | 2.0 | 0.5 | 260 | 9.6 |
| 28 | 1.1 | 2.0 | 0.9 | 260 | 12.6 |
| 29 | 1.1 | 2.0 | 1.0 | 260 | 18.5 |
| 30 | 1.1 | 2.0 | 1.1 | 260 | 13.3 |

Note:

1 mole ratio of diethylaluminum chloride to the sum of the titanium and vanadium.

2 mole ratio of the second co-catalyst (either triethyl aluminum or n-decoxydiethyl aluminum) to the sum of the titanium and vanadium.

3 mole ratio of n-decanol to the second addition of triethylaluminum.

The results illustrated in Table V indicate that at high temperature, increased activity may be realized through the addition of alcohol to the above catalyst system.

**Claims**

1. A solution process for the preparation of high molecular weight polymers of alpha-olefins selected from the group consisting of homopolymers of ethylene and copolymers of ethylene and $C_3$-$C_{12}$ higher alpha-olefins, by polymerization of ethylene and/or mixtures of ethylene and $C_3$-$C_{12}$ higher alpha-olefins under non-isothermal conditions in a tubular reactor or in a system of reactors which operate under different conditions, in the presence of a catalytic amount of a titanium-containing coordination catalyst in an inert solvent at a temperature in excess of 105°C, the catalyst having been formed in-line at a temperature of less than 30°C, characterized in:

   (a) activating the catalyst with a solution of a mixture of aluminum alkyl and alkoxy aluminum alkyl in inert solvent; and
   (b) controlling said process by adjusting the ratio of aluminum alkyl to alkoxy aluminum alkyl in the mixture of (a) ;

   said aluminum alkyl being of the formula $AlR_nX_{3-n}$ and said alkoxy aluminum alkyl being of the formula $AlR'_m(OR'')_{3-m}$, in which each R, R' and R" is independently selected from alkyl or aryl of 1-20 carbon atoms, X is halogen, n is 2-3 and m is 0-2.

2. A solution process for the preparation of high molecular weight polymers of alpha-olefins selected from the group consisting of homopolymers of ethylene and copolymers of ethylene and $C_3$-$C_{12}$ higher alpha-olefins, said process comprising feeding monomer selected from the group consisting of ethylene and mixtures of ethylene and at least one $C_3$-$C_{12}$ higher alpha-olefin, a coordination catalyst and inert hydrocarbon solvent to a reactor, polymerizing said monomer under non-isothermal conditions in a tubular reactor or in a system of reactors which operate under different conditions, at a temperature in the range of 105-320°C and recovering the polymer so obtained, said coordination catalyst having been formed from a first component and a second component, said first component containing titanium and said second component being a mixture of aluminum alkyl and alkoxy aluminum alkyl, the forming of the first and second catalyst components and the admixing thereof being carried out in-line at a temperature of less than 30°C, in which the control of said process includes adjusting the ratio of alkyl aluminum to alkoxy aluminum alkyl, said aluminum alkyl being of the formula $AlR_nX_{3-n}$ and said alkoxy aluminum alkyl being of the formula $AlR'_m(OR'')_{3-m}$, in which each R, R' and R" is independently selected from alkyl or aryl of 1-20 carbon atoms, X is halogen, n is 2-3 and m is 0-2.

3. The process of Claim 1 or Claim 2 in which R is alkyl of 2-8 carbon atoms and n=3, and each of R' and R" is alkyl of 2-8 carbon atoms and m=2.

4. The process of Claim 3 in which the first component is obtained by rapidly admixing a solution of a titanium tetrahalide, optionally containing vanadium oxytrihalide, and alkyl aluminum at a temperature of less than 30°C, and heating the resultant admixture to a temperature of 150-300°C for a period of 5 seconds to 60 minutes.

**5.** The process of Claim 4 in which the second component is in the form of a mixture of trialkyl aluminum and an alcohol in which the amount of alcohol is less than the stoichiometric amount to form dialkyl alkoxy aluminum.

**6.** The process of Claim 5 in which the trialkyl aluminum is $AlR^3_3$ in which $R^3$ is an alkyl group having 1-10 carbon atoms and the alcohol is of the formula $R^4OH$ in which $R^4$ is alkyl or aryl of 1-20 carbon atoms.

**7.** The process of Claim 4 in which the first component is formed from:

(i) a mixture of $MgR^1_2$ and $AlR^2_3$ in which each $R^1$ and $R^2$ are the same or different and each is independently selected from alkyl groups having 1-10 carbon atoms;
(ii) a reactive chloride component; and
(iii) titanium tetrachloride.

**8.** The process of Claim 4 in which the first component is formed by combining solutions of titanium tetrahalide, optionally containing vanadium oxytrihalide, with organoaluminum compound e.g. trialkyl aluminum or dialkyl aluminum halide, at a temperature of less than 30°C, heating the resultant admixture to a temperature of 150-300°C for a period of 5 seconds to 60 minutes; the preferred halide is chloride.

**9.** The process of any one of Claims 1-8 in which the coordination catalyst is used without separation of any components thereof.

**Patentansprüche**

**1.** Lösungsverfahren zur Herstellung hochmolekularer Polymere von $\alpha$-Olefinen, ausgewählt aus der Gruppe bestehend aus Ethylenhomopolymeren und Copolymeren von Ethylen und höheren $C_3$-$C_{12}$-$\alpha$-Olefinen, durch Polymerisieren von Ethylen und/oder Gemischen von Ethylen und höheren $C_3$-$C_{12}$-$\alpha$-Olefinen unter nicht-isothermen Bedingungen in einem Rohrreaktor oder einem System von Reaktoren, die bei unterschiedlichen Bedingungen betrieben werden, in Gegenwart einer katalytischen Menge eines titanhältigen Koordinationskatalysators in einem Inertlösungsmittel bei einer Temperatur von mehr als 105°C, wobei der Katalysator in-line bei einer Temperatur von weniger als 30°C gebildet wurde, gekennzeichnet durch folgende Schritte:

(a) Aktivieren des Katalysators mit einer Lösung eines Gemisches von Aluminiumalkyl und Alkoxyaluminiumalkyl in einem Inertlösungsmittel; und

(b) Steuern des Verfahrens durch Einstellen des Verhältnisses zwischen Aluminiumalkyl und Alkoxyaluminiumalkyl im Gemisch von (a);

wobei das Aluminiumalkyl die Formel $AlR_nX_{3-n}$ besitzt und das Alkoxyaluminiumalkyl die Formel $AlR'_m(OR'')_{3-m}$ besitzt, worin R, R' und R'' jeweils unabhängig aus Alkyl oder Aryl mit 1-20 Kohlenstoffatomen ausgewählt sind, X Halogen ist, n 2-3 ist und m 0-2 ist.

**2.** Lösungsverfahren zur Herstellung hochmolekularer Polymere von $\alpha$-Olefinen, ausgewählt aus der Gruppe bestehend aus Ethylenhomopolymeren und Copolymeren von Ethylen und höheren $C_3$-$C_{12}$-$\alpha$-Olefinen, wobei das Verfahren folgende Schritte umfaßt: Einbringen von Monomer, ausgewählt aus der Gruppe bestehend aus Ethylen und Gemischen von Ethylen und zumindest einem höheren $C_3$-$C_{12}$-$\alpha$-Olefin, eines Koordinationskatalysators und eines Inert-Kohlenwasserstofflösungsmittels in einen Reaktor, Polymerisieren des Monomers unter nicht-isothermen Bedingungen in einem Rohrreaktor oder einem System von Reaktoren, die bei unterschiedlichen Bedingungen betrieben werden, bei einer Temperatur im Bereich von 105°-320°C und Gewinnen des so erhaltenen Polymers, wobei der Koordinationskatalysator aus einer ersten und einer zweiten Komponente gebildet wurde, wobei die erste Komponente Titan enthält und die zweite Komponente ein Gemisch von Aluminiumalkyl und Alkoxyaluminiumalkyl ist, wobei das Bilden der ersten und der zweiten Katalysatorkomponente und deren Vermischen in-line bei einer Temperatur von weniger als 30°C durchgeführt werden, worin die Steuerung des Verfahrens das Einstellen des Verhältnisses zwischen Aluminiumalkyl und Alkoxyaluminiumalkyl umfaßt, wobei das Aluminiumalkyl die Formel $AlR_nX_{3-n}$ besitzt und das Alkoxyaluminiumalkyl die Formel $AlR'_m(OR'')_{3-m}$ besitzt, worin R, R' und R'' jeweils unabhängig aus Alkyl oder Aryl mit 1-20 Kohlenstoffatomen ausgewählt sind, X Halogen ist, n 2-3 ist und m 0-2 ist.

**3.** Verfahren nach Anspruch 1 oder 2, worin R Alkyl mit 2-8 Kohlenstoffatomen ist und n=3 und R' und R" jeweils Alkyl mit 2-8 Kohlenstoffatomen sind und m=2 ist.

**4.** Verfahren nach Anspruch 3, worin die erste Komponente durch rasches Vermischen einer Lösung eines Titantetrahalogenids, die gegebenenfalls Vanadiumoxytrihalogenid enthält, und Aluminiumalkyl bei einer Temperatur von weniger als 30°C sowie durch Erhitzen des resultierenden Gemisches auf eine Temperatur von 150°-300°C über eine Zeitspanne von 5 Sekunden bis 60 Minuten erhalten wird.

**5.** Verfahren nach Anspruch 4, worin die zweite Komponente in Form eines Gemisches von Trialkylaluminium und eines Alkohols vorliegt, worin die Alkoholmenge geringer als die stöchiometrische Menge ist, um Dialkylalkoxyaluminium zu bilden.

**6.** Verfahren nach Anspruch 5, worin das Trialkylaluminium $AlR^3_3$ ist, worin $R^3$ eine Alkylgruppe mit 1-10 Kohlenstoffatomen ist, und der Alkohol die Formel $R^4OH$ besitzt, worin $R^4$ Alkyl oder Aryl mit 1-20 Kohlenstoffatomen ist.

**7.** Verfahren nach Anspruch 4, worin die erste Komponente gebildet wird aus:

(i) einem Gemisch von $MgR^1_2$ und $AlR^2_3$, worin $R^1$ und $R^2$ jeweils gleich oder unterschiedlich sind und unabhängig aus Alkylgruppen mit 1-10 Kohlenstoffatomen ausgewählt sind;

(ii) einer reaktiven Chloridkomponente; und

(iii) Titantetrachlorid.

**8.** Verfahren nach Anspruch 4, worin die erste Komponente folgendermaßen gebildet wird: Kombinieren von Lösungen von Titantetrahalogenid, die gegebenenfalls Vanadiumoxytrihalogenid enthalten, mit einer Organoaluminiumverbindung, z.B. Trialkylaluminium oder Dialkylaluminiumhalogenid, bei einer Temperatur von weniger als 30°C und Erhitzen des resultierenden Gemisches auf eine Temperatur von 150°-300°C über eine Zeitspanne von 5 Sekunden bis 60 Minuten; wobei das bevorzugte Halogenid Chlorid ist.

**9.** Verfahren nach einem der Ansprüche 1-8, worin der Koordinationskatalysator ohne Abtrennung irgendwelcher Komponenten davon verwendet wird.

**Revendications**

**1.** Procédé en solution pour la préparation de polymères de fort poids moléculaire d'alpha-oléfines sélectionnés dans le groupe consistant en homopolymères d'éthylène et copolymères d'éthylène et d'alpha-oléfines supérieures $C_3$-$C_{12}$, par polymérisation de l'éthylène et/ou de mélanges d'éthylène et d'alpha-oléfines supérieures $C_3$-$C_{12}$ en conditions non isothermiques dans un réacteur tubulaire ou dans un système de réacteurs qui fonctionnent en conditions différentes, en présence d'une quantité catalytique d'un catalyseur de coordination contenant du titane, dans un solvant inerte, à une température au-delà de 105°C, le catalyseur ayant été formé en ligne à une température de moins de 30°C, caractérisé par :

(a) l'activation du catalyseur avec une solution d'un mélange d'alkyl aluminium et d'alcoxy alkyl aluminium dans un solvant inerte; et
(b) le contrôle dudit procédé en ajustant le rapport de l'alkyl aluminium à l'alcoxy alkyl aluminium dans le mélange de (a);

ledit alkyl aluminium étant de la formule $AlR_nX_{3-n}$ et ledit alcoxy alkyl aluminium étant de la formule $AlR'_m(OR")_{3-m}$, où chacun de R, R' et R" est indépendamment sélectionné parmi alkyle ou aryle de 1-20 atomes de carbone, X est halogène, n est 2-3 et m est 0-2.

**2.** Procédé en solution pour la préparation de polymères d'alpha-oléfines de poids moléculaire élevé, sélectionnés dans le groupe consistant en homopolymères d'éthylène et copolymères d'éthylène et d'alpha-oléfines supérieures $C_3$-$C_{12}$, ledit procédé consistant à fournir le monomère sélectionné dans le groupe consistant en éthylène et mélanges d'éthylène et d'au moins une alpha-oléfine supérieure $C_3$-$C_{12}$, un catalyseur de coordination et un hydrocarbure solvant inerte, à un réacteur, à polymériser ledit monomère en conditions non isothermiques dans un réacteur tubulaire ou dans un système de réacteurs qui fonctionnent en conditions différentes, à une température entre 105-320°C et à récupérer le polymère ainsi obtenu, ledit catalyseur de coordination ayant été formé d'un premier composant et d'un second composant, ledit premier composant contenant du titane et ledit second composant étant un mélange d'alkyl aluminium et d'alcoxy alkyl aluminium, la formation des premier et second composants du catalyseur et leur mélange étant effectués en ligne à une température de moins de 30°C, où le contrôle dudit procédé consiste à ajuster le rapport de l'alkyl aluminium à l'alcoxy alkyl aluminium, ledit alkyl aluminium étant de la formule $AlR_nX_{3-n}$ et ledit alcoxy alkyl aluminium étant de la formule $AlR'_m(OR'')_{3-m}$, où chacun de R, R' et R'' est indépendamment sélectionné parmi alkyle ou aryle de 1-20 atomes de carbone, X est halogène, n est 2-3 et m est 0-2.

3. Procédé de la Revendication 1 ou de la Revendication 2, dans lequel R est alkyle de 2-8 atomes de carbone et n=3, et chacun de R' et R'' est alkyle de 2-8 atomes de carbone et m=2.

4. Procédé de la Revendication 3, dans lequel le premier composant est obtenu par mélange rapide d'une solution d'un tétrahalogénure de titane, contenant facultativement de l'oxytrihalogénure de vanadium et d'un alkyl aluminium à une température de moins de 30°C, et chauffage du mélange résultant à une température de 150-300°C pendant 5 secondes à 60 minutes.

5. ; Procédé de la Revendication 4, dans lequel le second composant est sous la forme d'un mélange de trialkyl aluminium et d'un alcool dans lequel la quantité de l'alcool est inférieure à la quantité stoechiométrique, pour former un alcoxy dialkyl aluminium.

6. Procédé de la Revendication 5, dans lequel le trialkyl aluminium est $AlR^3_3$, dans lequel $R^3$ est un groupe alkyle ayant 1-10 atomes de carbone et l'alcool est de la formule $R^4OH$, où $R^4$ est alkyle ou aryle de 1-20 atomes de carbone.

7. Procédé de la Revendication 4, dans lequel le premier composant est formé de :

   (i) un mélange de $MgR^1_2$ et $AlR^2_3$, où chacun de $R^1$ et $R^2$ sont identiques ou différents et chacun est indépendamment sélectionné parmi les groupes alkyles ayant 1-10 atomes de carbone;
   (ii) un composant de chlorure réactif; et
   (iii) du tétrachlorure de titane.

8. Procédé de la Revendication 4, dans lequel le premier composant est formé en combinant des solutions de tétrahalogénure de titane, contenant facultativement de l'oxytrihalogénure de vanadium, avec un composé d'organoaluminium e.g. un halogénure de dialkyl aluminium ou du trialkyl aluminium, à une température de moins de 30°C, en chauffant le mélange résultant à une température de 150-300°C pendant 5 secondes à 60 minutes; l'halogénure préféré est le chlorure.

9. Procédé selon l'une quelconque des Revendications 1-8, dans lequel le catalayseur de coordination est utilisé sans séparation de ses composants.